# EUROPÄISCHE PATENTSCHRIFT

(11) **EP 3 426 542 B1**
(45) Veröffentlichungstag und Bekanntmachung des Hinweises auf die Patenterteilung: **06.11.2019**
(21) Anmeldenummer: 17708229.4
(22) Anmeldetag: 01.03.2017
(51) Int. Cl.: B62D 5/09

(54) **HYDRAULISCHE LENKEINRICHTUNG MIT ERWEITERTER FEHLERVERMEIDUNG**
HYDRAULIC STEERING DEVICE WITH ENHANCED FAULT PREVENTION
MÉCANISME DE DIRECTION HYDRAULIQUE À SYSTÈME DE PRÉVENTION DES ERREURS AMÉLIORÉ

(30) Priorität: 07.03.2016 DE 102016104090
(43) Veröffentlichungstag der Anmeldung: 16.01.2019
(73) Patentinhaber: Hydraulik Nord Fluidtechnik GmbH & Co. KG, 19370 Parchim (DE)
(72) Erfinder: BERGMANN, Erhard, 19079 Banzkow / OT Mirow (DE); KÄCKENMEISTER, Toralf, 19374 Raduhn (DE); DE LA MOTTE, Markus, 19300 Muchow (DE)
(74) Vertreter: Gulde & Partner
(86) Internationale Anmeldenummer: PCT/EP2017/054772
(87) Internationale Veröffentlichungsnummer: WO 2017/153223

(56) Entgegenhaltungen:
- DE-A1-102011 112 625

## Beschreibung

Die Erfindung betrifft eine hydraulische Lenkeinrichtung.

Hydraulische Lenkeinrichtungen, beispielsweise im Fahrzeugbereich, sind dem Fachmann grundlegend bekannt. Eine solche hydraulische Lenkeinrichtung wird beispielsweise in der DE 10 2011 112 625 A1 beschrieben. Diese ist gattungsbildend für den Gegenstand der vorliegenden Erfindung.

Kernbestandteil derartiger hydraulischer Lenkeinrichtungen ist ein Lenkzylinder, der mit einer Versorgungsanlage hydraulisch verbunden ist. Die Versorgungsanlage ist dabei mit dem Lenkzylinder über ein Lenkaggregat im Sinne einer Hauptstromverbindung hydraulisch wirkverbindbar. Über das Lenkaggregat kann der Lenkzylinder beispielsweise über ein Handlenkrad angesteuert werden. Weiterhin ist es bei hydraulischen Lenkeinrichtungen dieser Gattung bekannt, zur mechanisierten oder automatischen Ansteuerung des Lenkzylinders eine Nebenstromverbindung auszubilden. Die Versorgungsanlage kann hierzu mit dem Lenkzylinder über eine Stromregelventilanordnung, vorbei an der Hauptstromverbindung, flexibel hydraulisch wirkverbunden werden. Die Stromregelventilanordnung kann dazu mehrere unabhängig ansteuerbare Ventile umfassen, mit denen Vor- und Rückläufe zu Arbeitskammern des Lenkzylinders eingestellt werden können. Über ein Steuergerät mit einer Lenkungssoftware können die Ventile bekannterweise zur Realisierung einer Lenkungsfunktion angesteuert werden. Es ist auch bekannt, die hydraulische Lenkeinrichtung mit dem Steuergerät so zu regeln, dass Fehlstellungen eines oder mehrerer Ventile durch andere Ventile kompensiert werden. So lässt sich eine weitere Fehlbewegung des Lenkzylinders vermeiden und etwaige bereits bestehende Positionsabweichungen können weitgehend korrigiert werden.

Häufig verbleibt bei solchen Regelungstechniken jedoch eine restliche Regelabweichung, die sich automatisch nicht eliminieren lässt. Die Folge ist eine restliche Abweichung der Fahrspur des Fahrzeugs mit der hydraulischen Lenkeinrichtung von der eigentlich gewünschten Fahrspur. Dasselbe gilt für Fälle, in denen durch unvorhersehbare Störfaktoren, denen jedes technische System unterliegen kann, die Ventile eine fehlerhafte Stellgröße als Ansteuersignal erhalten. Dies kann rein beispielhaft bei einem elektromagnetisch zu öffnenden Ventil eine Abweichung des Ist-Wertes des Ansteuerungsstroms von seinem Sollwert sein.

Es ist nun Aufgabe der vorliegenden Erfindung, eine gattungsgemäße hydraulische Lenkeinrichtung anzugeben, die ein erhöhtes Maß an funktionaler Sicherheit gewährleistet.

Diese Aufgabe wird durch die Gegenstände der unabhängigen Patentansprüche 1 und 8 gelöst. Weitere bevorzugte Ausgestaltungen der Erfindung ergeben sich aus den übrigen, in den Unteransprüchen genannten Merkmalen.

Gegenstand der Erfindung ist eine hydraulische Lenkeinrichtung, die einen Lenkzylinder mit einer Versorgungsanlage hydraulisch verbindet. Dabei ist die Versorgungsanlage mit dem Lenkzylinder über ein Lenkaggregat zur Ausbildung einer Hauptstromverbindung hydraulisch wirkverbindbar. Weiterhin ist die Versorgungsanlage mit dem Lenkzylinder über eine Stromregelventilanordnung hydraulisch wirkverbindbar, so dass eine Nebenstromverbindung ausbildbar ist, welche die Hauptstromverbindung umgeht. Über die Nebenstromverbindung sind wenigstens eine erste Arbeitskammer und eine zweite Arbeitskammer des Lenkzylinders voneinander unabhängig mit Hydraulikflüssigkeit versorgbar. Die Stromregelventilanordnung umfasst mehrere unabhängig ansteuerbare Ventile, mit denen wenigstens ein erster Vorlauf und ein erster Rücklauf zu beziehungsweise von der ersten Arbeitskammer sowie ein zweiter Vorlauf und ein zweiter Rücklauf zu beziehungsweise von der zweiten Arbeitskammer einstellbar sind. Die hydraulische Lenkeinrichtung umfasst weiterhin wenigstens ein Absperrventil zur wenigstens abschnittsweisen Sperrung der Nebenstromverbindung und wenigstens ein elektrisches Steuergerät, das ausgebildet ist, Ansteuerungsströme für eines oder mehrere der Ventile auszugeben. Erfindungsgemäß ist vorgesehen, dass die hydraulische Lenkeinrichtung Mittel zur Messung und zum Vergleich wenigstens zweier Ansteuerungsströme umfasst und die Mittel weiterhin ausgebildet sind, bei Vorliegen einer Abweichung verglichener Ansteuerungsströme, wenigstens das Absperrventil in Sperrstellung zu bringen. Vorzugsweise erfolgt der Vergleich der Ansteuerungsströme paarweise.

Die Stromregelventilanordnung kann beispielsweise für jeden Vorlauf und jeden Rücklauf ein separates Ventil, beispielsweise ein 2-2-Wegeventil aufweisen. Die Stromregelventilanordnung kann aber auch andere Ventiltypen aufweisen, die geeignet sind, wenigstens den erster Vorlauf, den ersten Rücklauf, den zweiten Vorlauf und den zweiten Rücklauf einzustellen. Werden rein exemplarisch 4-3-Wegeventile oder 3-3-Wegeventile verwendet, so lässt sich die insgesamt benötigte Anzahl der Ventile (abgesehen von dem Absperrventil) zur Einstellung der Vor- und Rückläufe reduzieren, von beispielsweise vier auf zwei.

Hinsichtlich der Ansteuerungsströme können je nach Ventiltyp unterschiedliche elektrische Eingänge zur Verfügung stehen, über welche unterschiedliche Schaltungszustände beziehungsweise Betriebszustände des Ventils einstellbar sind. All dies ist dem Fachmann gut bekannt. Beispielhaft sind hier elektromagnetisch schaltbare Ventile mit mehr als einem elektrisch ansteuerbaren Magneten zu nennen.

Auch wenn sich das Folgende dem zuständigen Fachmann ohne weiteres erschließt, sei der Klarheit halber noch gesagt, an welchem elektrischen Eingang der Ansteuerungsstrom für den Vergleich zu messen ist, wenn mehrere elektrische Eingänge an einem Ventil zur Verfügung stehen. Im Zusammenhang mit der vorliegenden Erfindung gilt hier, dass der Ansteuerungsstrom an jenem elektrischen Eingang des jeweiligen Ventils zu messen ist, der anzusteuern ist, um den jeweiligen gerade benötigten Schaltungszustand des Ventils zur Realisierung des jeweiligen Vorlaufs oder Rücklaufs auszubilden. Der benötigte Betriebszustand hängt vom gerade gewünschten Betriebszustand der hydraulischen Lenkeinrichtung ab. Sollen für eine Bewegung des Lenkzylinders in eine Richtung beispielsweise der erste Vorlauf und der zweite Rücklauf geöffnet werden und verfügen die hierzu anzusteuernden Ventile über jeweils mehrere elektrische Eingänge, so werden jene Eingänge mit Ansteuerungsströmen beaufschlagt, welche den ersten Vorlauf und zweiten Rücklauf öffnen. Dann sind die an den betreffenden Eingängen anliegenden Ansteuerungsströme auch jene Ansteuerungsströme, die im Sinne der Erfindung gemessen und verglichen werden.

Bei Verfahrbewegungen des Lenkzylinders ist es in den meisten Betriebszuständen erforderlich, dass die Ventile zur Einstellung des ersten Vorlaufs und des zweiten Rücklaufs beziehungsweise die Ventile zur Einstellung des zweiten Vorlaufs und des ersten Rücklaufs einen identischen Öffnungsgrad aufweisen. Dies ist erforderlich, um einen gleichmäßigen Zustrom von Hydraulikflüssigkeit in beispielsweise die erste Arbeitskammer des Lenkzylinders und einen gleichmäßigen Abstrom von Hydraulikflüssigkeit aus beispielsweise der zweiten Arbeitskammer des Lenkzylinders (oder umgekehrt) sicherzustellen und so eine gleichmäßige und kontrollierte Lenkbewegung zu gewährleisten. Die Größe der Ansteuerungsströme für die jeweiligen Ventile stellt hier häufig ein Maß für den Öffnungsgrad des jeweiligen Ventils dar. Entsprechende Sollwert-Vorgaben für die Ansteuerungsströme sind bei jenen Ventilen, die einen identischen Öffnungsgrad aufweisen sollen dann entsprechend identisch. Durch Messung und Vergleich der tatsächlich anliegenden Ansteuerungsströme der Ventile mit gleichen Sollwert-Vorgaben kann durch Detektion von Unterschieden in den Größen der Ansteuerungsströme daher schnell und einfach festgestellt werden, ob hier Fehlereinflüsse wirksam sind. Mit anderen Worten sind in solchen Fällen die anliegenden Ansteuerungsströme nicht plausibel hinsichtlich des gewünschten Betriebszustands der Ventile und der hydraulischen Lenkeinrichtung.

Die erfindungsgemäße hydraulische Lenkeinrichtung bietet hier den Vorteil, dass schon bei Vorliegen von fehlerhaften Ansteuersignalen eine fehlerhafte Lenkbewegung gar nicht erst eintritt. Die hydraulische Unterstützung oder automatische Durchführung der Lenkbewegung über die Nebenstromverbindung wird dann komplett deaktiviert. In einem solchen Fall bleibt dann immer noch die Möglichkeit einer rein manuellen Steuerung über das Lenkaggregat erhalten.

Rein aus Klarheitsgründen sei noch angemerkt, dass der Ausdruck, dass die erste Arbeitskammer und die zweite Arbeitskammer des Lenkzylinders voneinander unabhängig mit Hydraulikflüssigkeit "versorgbar" sind, sowohl die definierte Zuführung, als auch die definierte Abführung von Hydraulikflüssigkeit in beziehungsweise aus der jeweiligen Arbeitskammer umfasst.

In weiter bevorzugter Ausgestaltung der Erfindung ist vorgesehen, dass die Mittel ausgebildet sind, die Ansteuerungsströme aller Ventile zu messen und die Ansteuerungsströme der Ventile zur Einstellung des ersten Vorlaufs und des zweiten Rücklaufs paarweise zu vergleichen sowie die Ansteuerungsströme der Ventile zur Einstellung des zweiten Vorlaufs und des ersten Rücklaufs paarweise zu vergleichen.

Dies bietet den Vorteil, dass die beschriebene Sicherheitsfunktionalität in beiden Verfahrrichtungen des Lenkzylinders zur Verfügung steht. Dieses Prinzip lässt sich selbstverständlich auf hydraulische Aktuatoren mit mehreren ansteuerbaren Freiheitsgraden übertragen.

In weiter bevorzugter Ausgestaltung der Erfindung ist vorgesehen, dass die Mittel ausgebildet sind, bei Vorliegen einer Abweichung verglichener Ansteuerungsströme, alle Ventile und das Absperrventil in Sperrstellung zu bringen.

Dies bietet den Vorteil, dass die Sicherheit der hydraulischen Lenkeinrichtung weiter erhöht wird. Im Falle einer Fehlfunktion des Absperrventils ist eine Deaktivierung der Nebenstromverbindung so weiterhin sichergestellt.

In weiter bevorzugter Ausgestaltung der Erfindung ist vorgesehen, dass die Mittel wenigstens eine Anzahl Sensoren zur Messung der Ansteuerungsströme und einen Vergleichsalgorithmus umfassen. Der Vergleichsalgorithmus kann bevorzugt in eine Lenkungssoftware des Steuerungsgeräts implementiert sein.

Dies bietet den Vorteil, dass die hydraulische Lenkeinrichtung einfach und sicher aufgebaut ist.

In weiter bevorzugter Ausgestaltung der Erfindung ist vorgesehen, dass das Steuergerät zusätzlich einen konventionellen Regelungsalgorithmus zur Ausregelung von Positionsabweichungen des Lenkzylinders umfasst.

Vorteilhafterweise werden hierdurch der Bedienkomfort, die Flexibilität und die Sicherheit der hydraulischen Lenkeinrichtung erhöht. Beispielsweise ist so auch ein automatischer Fahrbetrieb möglich.

In weiter bevorzugter Ausgestaltung der Erfindung ist vorgesehen, dass die Ventile der Stromregelventilanordnung als Proportionalstromventile oder Proportionalventile ausgebildet sind.

In weiter bevorzugter Ausgestaltung der Erfindung ist vorgesehen, dass die Stromregelventilanordnung auch als Sologerät, als reine "Steer-By-Wire-Lenkung" betreibbar ist.

Vorteilhafterweise werden hierdurch der Bedienkomfort, die Flexibilität und die Sicherheit der hydraulischen Lenkeinrichtung weiter erhöht.

Ein weiterer Aspekt der Erfindung betrifft ein Verfahren zur Absicherung einer hydraulischen Lenkeinrichtung, die einen Lenkzylinder mit einer Versorgungsanlage hydraulisch verbindet. Dabei ist die Versorgungsanlage mit dem Lenkzylinder über ein Lenkaggregat zur Ausbildung einer Hauptstromverbindung hydraulisch wirkverbindbar. Die Versorgungsanlage wird mit dem Lenkzylinder über eine Stromregelventilanordnung hydraulisch wirkverbunden, so dass sich eine Nebenstromverbindung ausbildet, welche die Hauptstromverbindung umgeht. Über die Nebenstromverbindung werden wenigstens eine erste Arbeitskammer und/oder eine zweite Arbeitskammer des Lenkzylinders voneinander unabhängig mit Hydraulikflüssigkeit versorgt. Die Stromregelventilanordnung umfasst mehrere unabhängig ansteuerbare Ventile, mit denen wenigstens ein erster Vorlauf und/oder ein erster Rücklauf für die erste Arbeitskammer sowie ein zweiter Vorlauf und/oder ein zweiter Rücklauf für die zweite Arbeitskammer eingestellt werden. Die hydraulische Lenkeinrichtung umfasst weiterhin wenigstens ein Absperrventil zur wenigstens abschnittsweisen Sperrung der Nebenstromverbindung und weiterhin wenigstens ein elektrisches Steuergerät, das Ansteuerungsströme für eines oder mehrere Ventile ausgibt. Das Verfahren umfasst erfindungsgemäß wenigstens die folgenden weiteren Schritte: Messung wenigstens zweier Ansteuerungsströme; Vergleich wenigstens zweier Ansteuerungsströme; und Verlagerung wenigstens des Absperrventils in Sperrstellung, wenn eine Abweichung verglichener Ansteuerungsströme vorliegt. Vorzugsweise werden die Ansteuerungsströme paarweise verglichen.

Die hydraulische Lenkeinrichtung des Verfahrens der Erfindung entspricht der weiter oben beschriebenen erfindungsgemäßen hydraulischen Lenkeinrichtung. Die entsprechenden Vorteile der erfindungsgemäßen hydraulischen Lenkeinrichtung gelten mithin sinngemäß auch für das erfindungsgemäße Verfahren.

Angemerkt sei noch, dass der Ausdruck, dass die erste Arbeitskammer und/oder die zweiten Arbeitskammer des Lenkzylinders voneinander unabhängig mit Hydraulikflüssigkeit "versorgt werden", sowohl die definierte Zuführung, als auch die definierte Abführung von Hydraulikflüssigkeit in beziehungsweise aus der jeweiligen Arbeitskammer umfasst.

In bevorzugter Ausgestaltung des Verfahrens der Erfindung ist vorgesehen, dass die Ansteuerungsströme aller Ventile gemessen werden; und die Ansteuerungsströme der Ventile zur Einstellung des ersten Vorlaufs und des zweiten Rücklaufs paarweise verglichen werden sowie die Ansteuerungsströme der Ventile zur Einstellung des zweiten Vorlaufs und des ersten Rücklaufs paarweise vergleichen werden.

Die einzelnen in dieser Anmeldung offenbarten Merkmale sind mit Vorteil untereinander kombinierbar.

Die Erfindung wird nachfolgend anhand eines Ausführungsbeispiels und dazugehöriger Zeichnungen näher erläutert. Die Figuren zeigen:
- Figur 1: eine prinziphafte Darstellung einer erfindungsgemäßen hydraulischen Lenkeinrichtung in einer bevorzugten Ausführungsform;
- Figur 2: ein Blockschaltbild eines erfindungsgemäßen Verfahrens zur Absicherung einer hydraulischen Lenkeinrichtung in einer bevorzugten Ausführungsform; und
- Figur 3a-c: eine prinziphafte Darstellung einer erfindungsgemäßen hydraulischen Lenkeinrichtung in alternativen bevorzugten Ausführungsformen.

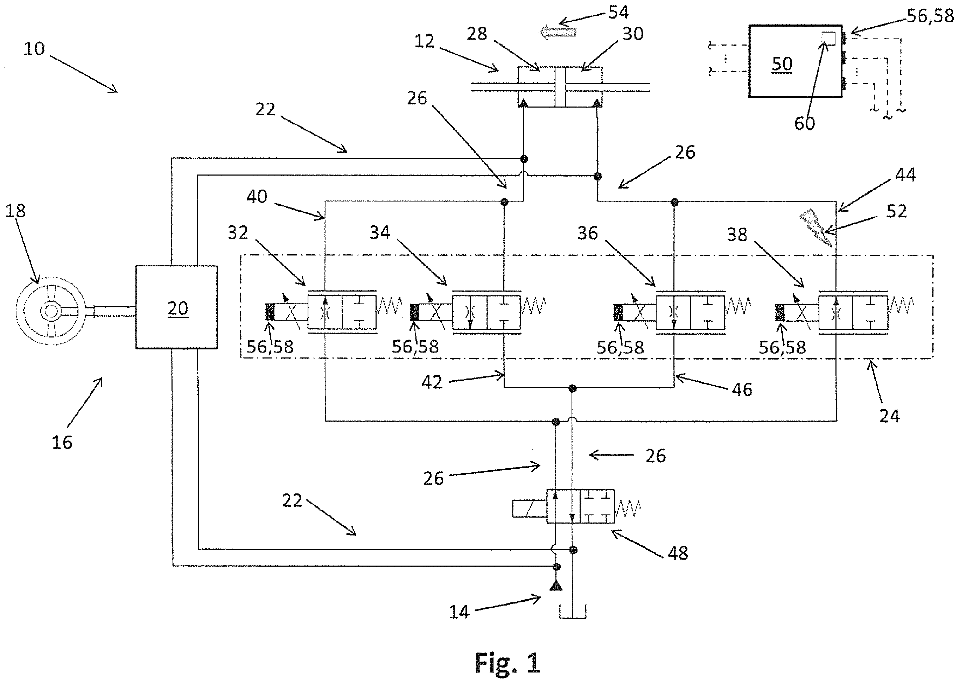

Figur 1 zeigt eine prinziphafte Darstellung einer erfindungsgemäßen hydraulischen Lenkeinrichtung 10 in einer bevorzugten Ausführungsform. Die hydraulischen Lenkeinrichtung 10 umfasst in vereinfachter Darstellung auch die in der Figur 1 der DE 10 2011 112 625 A1 gezeigten Merkmale, unterscheidet sich von dieser jedoch hinsichtlich einiger weiter unten beschriebenen Merkmale.

Zunächst umfasst die hydraulische Lenkeinrichtung 10 einen Lenkzylinder 12. Der Lenkzylinder 12 ist mit einer Versorgungsanlage 14 hydraulisch verbunden. Die Versorgungsanlange umfasst hier eine Förderpumpe mit einem Reservoir an Hydraulikflüssigkeit. Die Versorgungsanlage 14 ist weiterhin mit Lenkzylinder 12 über ein Lenkaggregat 16 hydraulisch wirkverbindbar. Das Lenkaggregat 16 umfasst hier ein manuelles Lenkrad 18 und ein Lenkventil 20. Somit ist zwischen der Versorgungsanlage 14 und dem Lenkzylinder 12 eine Hauptstromverbindung 22 ausgebildet.

Weiterhin ist die Versorgungsanlage 14 mit dem Lenkzylinder 12 über eine Stromregelventilanordnung 24 hydraulisch wirkverbindbar, so dass sich eine Nebenstromverbindung 26 ausbilden lässt. Diese umgeht, wenn sie ausgebildet ist, die Hauptstromverbindung 22. Die Nebenstromverbindung 26 ist ausgebildet, wenn Hydraulikflüssigkeit zwischen dem Lenkzylinder 12 und der Versorgungsanlage 14 über die Stromregelventilanordnung 24 verkehren kann. Ansonsten ist sie nicht ausgebildet beziehungsweise unterbrochen oder gesperrt.

Der Lenkzylinder 12 verfügt über eine erste Arbeitskammer 28 und eine zweite Arbeitskammer 30. Diese erste Arbeitskammer 28 und zweite Arbeitskammer 30 sind über die Nebenstromverbindung 26 voneinander unabhängig mit Hydraulikflüssigkeit versorgbar. Hierzu umfasst die Stromregelventilanordnung 24 mehrere unabhängig ansteuerbare Ventile 32, 34, 36, 38. Die Ventile 32, 34, 36, 38 der Stromregelventilanordnung 24 sind vorliegend rein exemplarisch als elektromagnetisch betätigbare 2-2-Wege-Proportionalstromventile dargestellt und ausgebildet. Sie können aber auch als Proportionalventile anderen Typs oder als sonstige dem Fachmann bekannte Ventile ausgebildet sein. Über das Ventil 32 ist hier ein erster Vorlauf 40 und über das Ventil 34 ein erster Rücklauf 42 für die erste Arbeitskammer 28 einstellbar. Die Einstellung erfolgt durch definiertes Öffnen oder Schließen der Ventile 32, 34. Über das Ventil 38 ist hier ein zweiter Vorlauf 44 und über das Ventil 36 ein zweiter Rücklauf 46 für die zweite Arbeitskammer 30 einstellbar.

Die hydraulische Lenkeinrichtung 10 umfasst weiterhin ein Absperrventil 48 zur Sperrung der gesamten Nebenstromverbindung 26. Zudem umfasst die hydraulische Lenkeinrichtung 10 ein elektrisches Steuergerät 50. Das Steuergerät 50 ist ausgebildet, Ansteuerungsströme für eines oder mehrere Ventile 32, 34, 36, 38 und weitere Elemente der hydraulischen Lenkeinrichtung auszugeben.

Das Steuergerät 50 umfasst hier auch einen konventionellen Regelungsalgorithmus zur Ausregelung von Positionsabweichungen des Lenkzylinders 12. Solche Regelungsalgorithmen sind dem Fachmann gut bekannt, so dass hier nur eine exemplarische Erklärung gegeben ist. Führt beispielsweise ein Fehlereinfluss 52 dazu, dass das Ventil 38 unerwünscht offen steht, so detektiert der Regelungsalgorithmus eine sich einstellende Positionsabweichung 54 am Lenkzylinder 12. Der Regelungsalgorithmus stoppt die sich einstellende Positionsabweichung 54 durch Öffnung des Ventils 36, wodurch ein überflüssiger Volumenstrom an Hydraulikflüssigkeit im zweiten Vorlauf 44 in Richtung der zweiten Arbeitskammer 30 gestoppt und über das Ventil 36 im zweiten Rücklauf 46 abgeführt wird. Die bereits vorhandene Positionsabweichung 54 am Lenkzylinder 12 wird dann durch den Regelungsalgorithmus kompensiert, indem das Ventil 32 geöffnet wird. Bei derartigen Regeltechniken bleibt üblicherweise eine restliche Regelabweichung zurück.

Gemäß der Erfindung umfasst die hydraulische Lenkeinrichtung 12 weiterhin Mittel 56 zur Messung und zum paarweisen Vergleich wenigstens zweier Ansteuerungsströme. In diesem Ausführungsbeispiel sind die Mittel 56 ausgebildet, die Ansteuerungsströme aller Ventile 32, 34, 36, 38 messtechnisch zu erfassen. Zu diesem Zweck können die Mittel 56 eine Anzahl Sensoren 58 zur Messung der Ansteuerungsströme direkt am Ausgang des Steuergeräts 50, an den Ventilen 32, 34, 36, 38 oder dazwischen umfassen.

In den meisten Betriebszuständen benötigen die Ventile 32 und 36 sowie die Ventile 34 und 38 identische Öffnungsgrade, also identische elektrische Ansteuerungsströme. Ist diese Bedingung nicht erfüllt, so ist der Zustand der hydraulischen Lenkeinrichtung 12 nicht plausibel für einen ordnungsgemäßen Betrieb.

Die Mittel 56 sind daher ausgebildet wenigstens zwei Ansteuerungsströme paarweise zu vergleichen (die Ansteuerungsströme der Ventile 32 und 36 und/oder der Ventile 34 und 38) und bei Vorliegen einer Abweichung verglichener Ansteuerungsströme, das Absperrventil 48 in Sperrstellung zu bringen. In diesem Ausführungsbeispiel sind die Mittel 56 ausgebildet, die Ansteuerungsströme der Ventile 32 und 36, die der Einstellung des ersten Vorlaufs 40 und des zweiten Rücklaufs 46 dienen, zu vergleichen und auch die Ventile 34 und 38, die der Einstellung des zweiten Vorlaufs 44 und des ersten Rücklaufs 42 dienen, zu vergleichen. Die Mittel 56 umfassen einen entsprechenden Vergleichsalgorithmus 60, der hier exemplarisch in dem Steuergerät 50 implementiert ist.

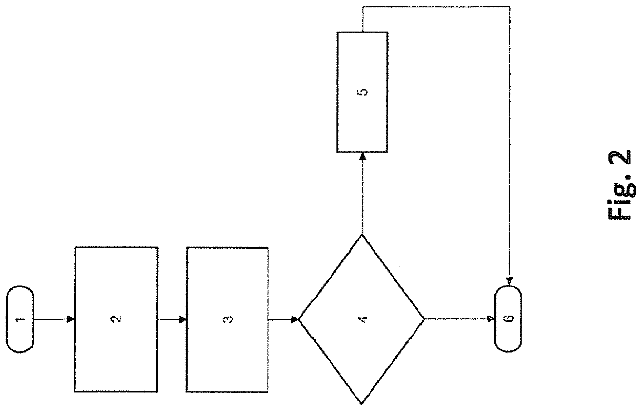

Figur 2 zeigt ein Blockschaltbild eines erfindungsgemäßen Verfahrens zur Absicherung einer hydraulischen Lenkeinrichtung, die einen Lenkzylinder mit einer Versorgungsanlage hydraulisch verbindet, in einer bevorzugten Ausführungsform. Die zugrunde liegende hydraulische Lenkeinrichtung ist die hydraulischen Lenkeinrichtung 10 aus Figur 1. Die Versorgungsanlage 14 ist mit dem Lenkzylinder 12 über ein Lenkaggregat 16 zur Ausbildung einer Hauptstromverbindung 22 hydraulisch wirkverbindbar.

In einem ersten Verfahrensschritt werden einige grundlegende und bekannte Abläufe zusammengefasst. So wird die Versorgungsanlage 14 mit dem Lenkzylinder 12 über die Stromregelventilanordnung 24 hydraulisch wirkverbunden, so dass sich die Nebenstromverbindung 26 ausbildet, welche die Hauptstromverbindung 22 umgeht. Über die Nebenstromverbindung 26 werden die erste Arbeitskammer 28 und die zweite Arbeitskammer 30 des Lenkzylinders 12 voneinander unabhängig mit Hydraulikflüssigkeit versorgt. Hier wird, rein exemplarisch, der ersten Arbeitskammern 28 Hydraulikflüssigkeit zugeführt und aus der zweiten Arbeitskammer 30 wird Hydraulikflüssigkeit kontrolliert abgeführt.

Die Stromregelventilanordnung 24 umfasst insgesamt mehrere unabhängig ansteuerbare Ventile 32, 34, 36, 38. Für die erste Arbeitskammer 28 wird der erste Vorlauf 40 mit dem Ventil 32 definiert geöffnet und der erste Rücklauf 42 mit dem Ventil 34 geschlossen. Für die zweite Arbeitskammer 30 wird der zweite Vorlauf 44 mit dem Ventil 38 geschlossen und der zweite Rücklauf 46 mit dem Ventil 36 definiert geöffnet. Dadurch, dass das Ventil 36 definiert geöffnet wird, kann sich an dem Ventil 36 ein Gegendruck aufbauen und Hydraulikflüssigkeit aus der zweiten Arbeitskammer 30 definiert abgeführt werden. Die Sollwerte für die Ansteuerungsströme der Ventile 32, 36 werden dabei identisch gewählt.

Soll hingegen der zweiten Arbeitskammer 30 Hydraulikflüssigkeit zugeführt werden und aus der ersten Arbeitskammern 28 Hydraulikflüssigkeit kontrolliert abgeführt werden, so erfolgen die voran beschriebenen Abläufe analog.

Das elektrische Steuergerät 50 der hydraulischen Lenkeinrichtung 10 gibt entsprechende Ansteuerungsströme für die Ventile 32, 34, 36, 38 aus.

Wesentlich für die Erfindung sind die folgenden Verfahrensschritte. In einem zweiten Verfahrensschritt erfolgt eine Messung der Ansteuerungsströme der Ventile 32, 34, 36, 38. In einem dritten Verfahrensschritt werden die Ansteuerungsströme der Ventile 32, 36 und 34, 38 paarweise verglichen. In einem vierten Verfahrensschritt erfolgt eine Auswertung der Ergebnisse der paarweisen Vergleiche. Wenn die Ansteuerungsströme der Ventile 32, 36 und/oder 34, 38 nicht übereinstimmen, so wird in einem fünften Verfahrensschritt das Absperrventil 48 in Sperrstellung gebracht und danach in einem sechsten Verfahrensschritt der Durchlauf des Vergleichsalgorithmus beendet. Wenn sowohl die Ansteuerungsströme der Ventile 32 und 36, als auch der Ventile 34 und 38 übereinstimmen, so wird in dem sechsten Verfahrensschritt der Durchlauf des Vergleichsalgorithmus von Verfahrensschritt 1 oder 2 an erneut durchlaufen.

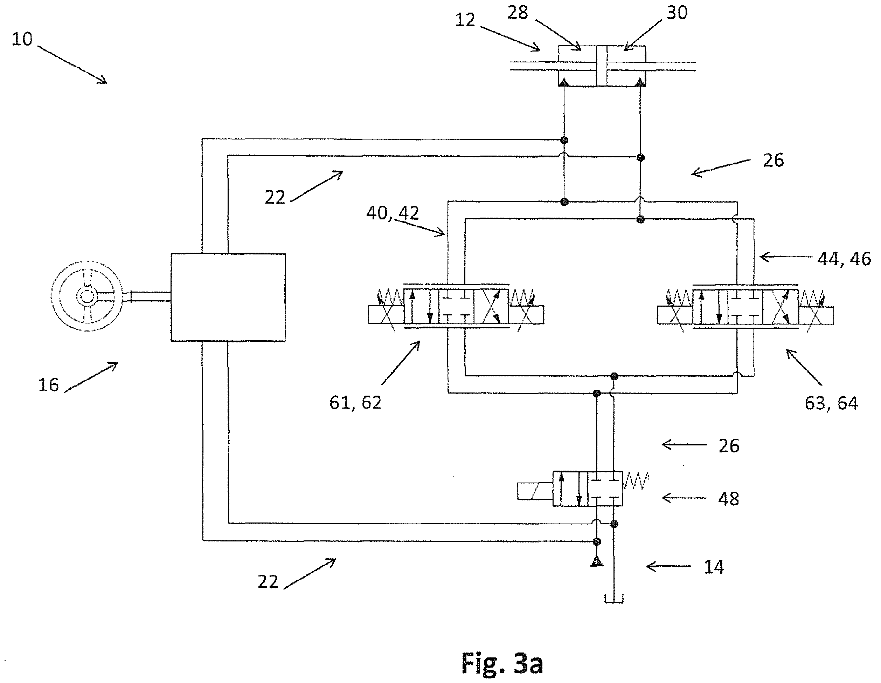

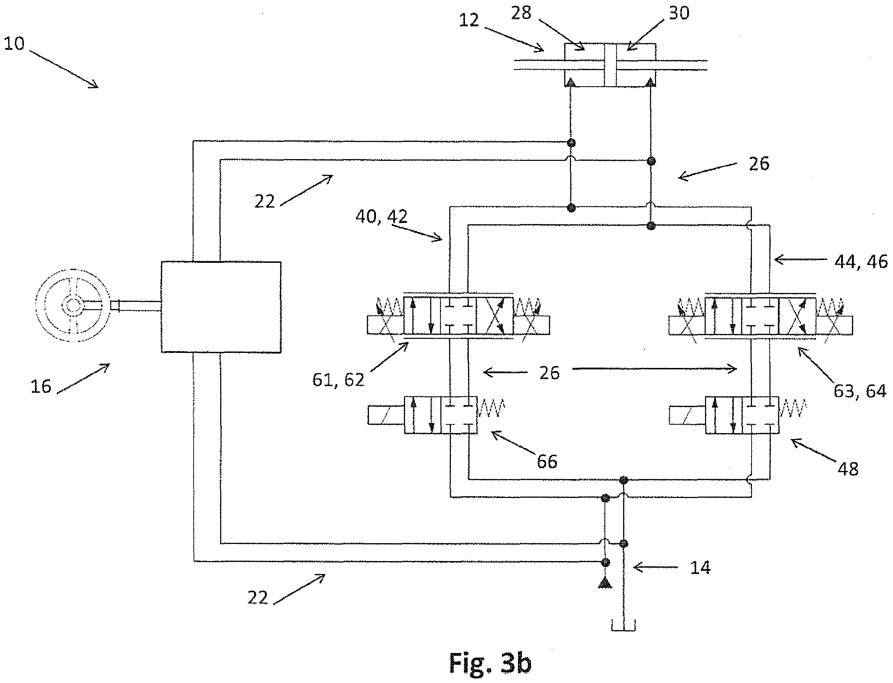

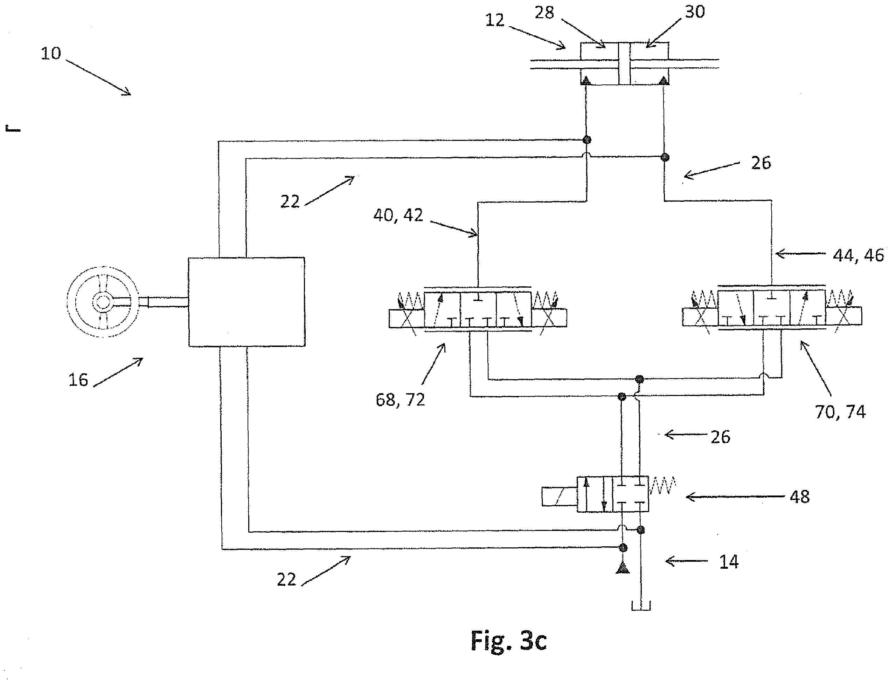

Figur 3 zeigt eine prinziphafte Darstellung einer erfindungsgemäßen hydraulischen Lenkeinrichtung in alternativen bevorzugten Ausführungsformen. Die hydraulische Lenkeinrichtung 10 in Figur 3a, 3b sowie 3c entspricht weitgehend der aus Figur 1. Hier werden lediglich die konstruktiven Unterschiede hervorgehoben.

In der in Figur 3a gezeigten Ausführungsform sind die vier Ventile 32, 34, 36, 38, die in Figur 1 als 2-2-Wegeventile vorliegen, durch zwei ebenfalls unabhängig ansteuerbare Ventile 61, 63 anderer Bauart ersetzt. Die Ventile 61, 63 liegen in diesem Ausführungsbeispiel als zwei 4-3-Wegeventile 62, 64 vor. Die Nebenstromverbindung 26 ist über das Absperrventil 48 herstellbar und sperrbar.

In der in Figur 3b gezeigten Ausführungsform sind die vier Ventile 32, 34, 36, 38, die in Figur 1 als 2-2-Wegeventile vorliegen, ebenso durch die Ventile 61, 63 ersetzt, die hier in Form der zwei 4-3-Wegeventile 62, 64 vorliegen. Die Nebenstromverbindung 26 ist jedoch über das Absperrventil 48 und ein weiteres Absperrventil 66 herstellbar und sperrbar.

In der in Figur 3c gezeigten Ausführungsform sind die vier Ventile 32, 34, 36, 38, die in Figur 1 als 2-2-Wegeventile vorliegen, durch zwei unabhängig ansteuerbare Ventile 68, 70 einer weiteren alternativen Bauart ersetzt. Die Ventile 68, 70 liegen in diesem Ausführungsbeispiel als zwei 3-3-Wegeventile 72, 74 vor. Die Nebenstromverbindung 26 ist über das Absperrventil 48 herstellbar und sperrbar.

Die gezeigten Ausführungsformen sind hinsichtlich ihrer Bauweise besonders kompakt gestaltet.

### Bezugszeichen

- 10: hydraulische Lenkeinrichtung
- 12: Lenkzylinder
- 14: Versorgungsanlage
- 16: Lenkaggregat
- 18: manuelles Lenkrad
- 20: Lenkventil
- 22: Hauptstromverbindung
- 24: Stromregelventilanordnung
- 26: Nebenstromverbindung
- 28: erste Arbeitskammer
- 30: zweite Arbeitskammer
- 32: Ventil
- 34: Ventil
- 36: Ventil
- 38: Ventil
- 40: erster Vorlauf
- 42: erster Rücklauf
- 44: zweiter Vorlauf
- 46: zweiter Rücklauf
- 48: Absperrventil
- 50: Steuergerät
- 52: Fehlereinfluss
- 54: Positionsabweichung
- 56: Mittel
- 58: Sensoren
- 60: Vergleichsalgorithmus
- 61: Ventil
- 62: 4-3-Wegeventil
- 63: Ventil
- 64: 4-3-Wegeventil
- 66: Absperrventil
- 68: Ventil
- 70: Ventil
- 72: 3-3-Wegeventil
- 74: 3-3-Wegeventil

## Patentansprüche

1. Hydraulische Lenkeinrichtung (10), die einen Lenkzylinder (12) mit einer Versorgungsanlage (14) hydraulisch verbindet, wobei die Versorgungsanlage (14) mit dem Lenkzylinder (12) über ein Lenkaggregat (16) zur Ausbildung einer Hauptstromverbindung (22) hydraulisch wirkverbindbar ist und die Versorgungsanlage (14) mit dem Lenkzylinder (12) zudem über eine Stromregelventilanordnung (24) hydraulisch wirkverbindbar ist, so dass eine Nebenstromverbindung (26) ausbildbar ist, welche die Hauptstromverbindung (22) umgeht und über welche wenigstens eine erste Arbeitskammer (28) und eine zweite Arbeitskammer (30) des Lenkzylinders (12) voneinander unabhängig mit Hydraulikflüssigkeit versorgbar sind und wobei die Stromregelventilanordnung (24) mehrere unabhängig ansteuerbare Ventile (32, 34, 36, 38, 61, 63, 68, 70) umfasst, mit denen wenigstens ein erster Vorlauf (40) und ein erster Rücklauf (42) für die erste Arbeitskammer (28) sowie ein zweiter Vorlauf (44) und ein zweiter Rücklauf (46) für die zweite Arbeitskammer (30) einstellbar sind und wobei die hydraulische Lenkeinrichtung (10) weiterhin wenigstens ein Absperrventil (48, 66) zur wenigstens abschnittsweisen Sperrung der Nebenstromverbindung (26) und weiterhin wenigstens ein elektrisches Steuergerät (50) umfasst, das ausgebildet ist, Ansteuerungsströme für eines oder mehrere Ventile (32, 34, 36, 38, 61, 63, 68, 70) auszugeben,
**dadurch gekennzeichnet, dass**
die hydraulische Lenkeinrichtung (10) Mittel (56) zur Messung und zum Vergleich wenigstens zweier Ansteuerungsströme umfasst und die Mittel (56) weiterhin ausgebildet sind, bei Vorliegen einer Abweichung verglichener Ansteuerungsströme, wenigstens das Absperrventil (48, 66) in Sperrstellung zu bringen.

2. Hydraulische Lenkeinrichtung nach Anspruch 1,
**dadurch gekennzeichnet, dass**
die Mittel (56) ausgebildet sind, die Ansteuerungsströme aller Ventile (32, 34, 36, 38, 61, 63, 68, 70) zu messen und die Ansteuerungsströme der Ventile (32, 36, 61, 63, 68, 70) zur Einstellung des ersten Vorlaufs (40) und des zweiten Rücklaufs (46) paarweise zu vergleichen sowie die Ansteuerungsströme der Ventile (34, 38, 61, 63, 68, 70) zur Einstellung des zweiten Vorlaufs (44) und des ersten Rücklaufs (42) paarweise zu vergleichen.

3. Hydraulische Lenkeinrichtung nach Anspruch 1 oder 2,
**dadurch gekennzeichnet, dass**
die Mittel (56) ausgebildet sind, bei Vorliegen einer Abweichung verglichener Ansteuerungsströme, alle Ventile (32, 34, 36, 38, 61, 63, 68, 70) und das Absperrventil (48, 66) in Sperrstellung zu bringen.

4. Hydraulische Lenkeinrichtung nach einem der Ansprüche 1 bis 3,
**dadurch gekennzeichnet, dass**
die Mittel (56) wenigstens eine Anzahl Sensoren (58) zur Messung der Ansteuerungsströme und einen Vergleichsalgorithmus (60) umfassen.

5. Hydraulische Lenkeinrichtung nach einem der Ansprüche 1 bis 4,
**dadurch gekennzeichnet, dass**
das Steuergerät (50) zusätzlich einen konventionellen Regelungsalgorithmus zur Ausregelung von Positionsabweichungen (54) des Lenkzylinders (12) umfasst.

6. Hydraulische Lenkeinrichtung nach einem der Ansprüche 1 bis 5,
**dadurch gekennzeichnet, dass**
die Ventile (32, 34, 36, 38, 61, 63, 68, 70) der Stromregelventilanordnung (24) als Proportionalstromventile oder Proportionalventile ausgebildet sind.

7. Hydraulische Lenkeinrichtung nach einem der Ansprüche 1 bis 6,
**dadurch gekennzeichnet, dass**
die Stromregelventilanordnung (24) auch als Sologerät, als reine "Steer-By-Wire-Lenkung" betreibbar ist.

8. Verfahren zur Absicherung einer hydraulischen Lenkeinrichtung (10), die einen Lenkzylinder (12) mit einer Versorgungsanlage (14) hydraulisch verbindet, wobei die Versorgungsanlage (14) mit dem Lenkzylinder (12) über ein Lenkaggregat (16) zur Ausbildung einer Hauptstromverbindung (22) hydraulisch wirkverbindbar ist und die Versorgungsanlage (14) zudem mit dem Lenkzylinder (12) über eine Stromregelventilanordnung (24) hydraulisch wirkverbunden wird, so dass sich eine Nebenstromverbindung (26) ausbildet, welche die Hauptstromverbindung (22) umgeht und über welche wenigstens eine erste Arbeitskammer (28) und/oder eine zweite Arbeitskammer (30) des Lenkzylinders (12) voneinander unabhängig mit Hydraulikflüssigkeit versorgt werden und wobei die Stromregelventilanordnung (24) mehrere unabhängig ansteuerbare Ventile (32, 34, 36, 38, 61, 63, 68, 70) umfasst, mit denen wenigstens ein erster Vorlauf (40) und/oder ein erster Rücklauf (42) für die erste Arbeitskammer (28) sowie ein zweiter Vorlauf (44) und/oder ein zweiter Rücklauf (46) für die zweite Arbeitskammer (30) eingestellt werden und wobei die hydraulische Lenkeinrichtung (10) weiterhin wenigstens ein Absperrventil (48, 66) zur wenigstens abschnittsweisen Sperrung der Nebenstromverbindung (26) und weiterhin wenigstens ein elektrisches Steuergerät (50) umfasst, das Ansteuerungsströme für eines oder mehrere Ventile (32, 34, 36, 38, 61, 63, 68, 70) ausgibt,
umfassend wenigstens die Schritte:
- Messung wenigstens zweier Ansteuerungsströme;
- Vergleich wenigstens zweier Ansteuerungsströme; und
- Verlagerung wenigstens des Absperrventils (48, 66) in Sperrstellung, wenn eine Abweichung verglichener Ansteuerungsströme vorliegt.

9. Verfahren zur Absicherung einer hydraulischen Lenkeinrichtung nach Anspruch 8, **dadurch gekennzeichnet, dass**
- die Ansteuerungsströme aller Ventile (32, 34, 36, 38, 61, 63, 68, 70) gemessen werden; und
- die Ansteuerungsströme der Ventile (32, 36, 61, 63, 68, 70) zur Einstellung des ersten Vorlaufs (40) und des zweiten Rücklaufs (46) paarweise verglichen werden sowie die Ansteuerungsströme der Ventile (34, 38, 61, 63, 68, 70) zur Einstellung des zweiten Vorlaufs (44) und des ersten Rücklaufs (42) paarweise verglichen werden.

## Claims

1. A hydraulic steering device (10) which hydraulically connects a steering cylinder (12) to a supply system (14), wherein the supply system (14) is hydraulically operatively connectable to the steering cylinder (12) via a steering assembly (16) for the purposes of forming a main flow connection (22), and the supply system (14) is in addition hydraulically operatively connectable to the steering cylinder (12) via a flow regulating valve arrangement (24) so that a secondary flow connection (26) can be formed which bypasses the main flow connection (22) and via which at least one first working chamber (28) and one second working chamber (30) of the steering cylinder (12) can be supplied independently of one another with hydraulic fluid, and wherein the flow regulating valve arrangement (24) comprises multiple independently actuable valves (32, 34, 36, 38, 61, 63, 68, 70) by means of which at least a first feed (40) and a first return (42) for the first working chamber (28) and a second feed (44) and a second return (46) for the second working chamber (30) can be adjusted, and wherein the hydraulic steering device (10) furthermore comprises at least one shut-off valve (48, 66) for shutting off the secondary flow connection (26) at least in sections and furthermore comprises at least one electrical control apparatus (50) which is designed to output actuation currents for one or more valves (32, 34, 36, 38, 61, 63, 68, 70),
**characterized in that**
the hydraulic steering device (10) comprises means (56) for measuring and for comparing at least two actuation currents, and the means (56) are furthermore designed to move at least the shut-off valve (48, 66) into a shut-off position in the presence of a deviation of compared actuation currents.

2. The hydraulic steering device according to Claim 1,
**characterized in that**
the means (56) are designed to measure the actuation currents of all of the valves (32, 34, 36, 38, 61, 63, 68, 70) and to compare the actuation currents of the valves (32, 36, 61, 63, 68, 70) for adjusting the first feed (40) and the second return (46) in pairs and to compare the actuation currents of the valves (34, 38, 61, 63, 68, 70) for adjusting the second feed (44) and the first return (42) in pairs.

3. The hydraulic steering device according to Claim 1 or 2,
**characterized in that**
the means (56) are designed to move all of the valves (32, 34, 36, 38, 61, 63, 68, 70) and the shut-off valve (48, 66) into a shut-off position in the presence of a deviation of compared actuation currents.

4. The hydraulic steering device according to any one of Claims 1 to 3,
**characterized in that**
the means (56) comprise at least a number of sensors (58) for measuring the actuation currents and a comparison algorithm (60).

5. The hydraulic steering device according to any one of Claims 1 to 4,
**characterized in that**
the control apparatus (50) additionally comprises a conventional control algorithm for regulating position deviations (54) of the steering cylinder (12).

6. The hydraulic steering device according to any one of Claims 1 to 5,
**characterized in that**
the valves (32, 34, 36, 38, 61, 63, 68, 70) of the flow regulating valve arrangement (24) are designed as proportional flow valves or proportional valves.

7. The hydraulic steering device according to any one of Claims 1 to 6,
**characterized in that**
the flow regulating valve arrangement (24) can also be operated as a solo apparatus, as a pure "steer-by-wire steering system".

8. A method for safeguarding a hydraulic steering device (10) which hydraulically connects a steering cylinder (12) to a supply system (14), wherein the supply system (14) is hydraulically operatively connectable to the steering cylinder (12) via a steering assembly (16) for the purposes of forming a main flow connection (22), and the supply system (14) is in addition hydraulically operatively connected to the steering cylinder (12) via a flow regulating valve arrangement (24)so that a secondary flow connection (26) is formed which bypasses the main flow connection (22) and via which at least one first working chamber (28) and/or one second working chamber (30) of the steering cylinder (12) are supplied independently of one another with hydraulic fluid, and wherein the flow regulating valve arrangement (24) comprises multiple independently actuable valves (32, 34, 36, 38, 61, 63, 68, 70), by means of which at least a first feed (40) and/or a first return (42) for the first working chamber (28) and a second feed (44) and/or a second return (46) for the second working chamber (30) are adjusted, and wherein the hydraulic steering device (10) furthermore comprises at least one shut-off valve (48, 66) for shutting off the secondary flow connection (26) at least in sections and furthermore comprises at least one electrical control apparatus (50) which outputs actuation currents for one or more valves (32, 34, 36, 38, 61, 63, 68, 70),
comprising at least the steps of:
- measuring at least two actuation currents;
- comparing at least two actuation currents; and
- displacing at least the shut-off valve (48, 66) into a shut-off position if a deviation of compared actuation currents is present.

9. The method for safeguarding a hydraulic steering device according to Claim 8, **characterized in that**
- the actuation currents of all of the valves (32, 34, 36, 38, 61, 63, 68, 70) are measured; and
- the actuation currents of the valves (32, 36, 61, 63, 68, 70) for adjusting the first feed (40) and the second return (46) are compared in pairs and the actuation currents of the valves (34, 38, 61, 63, 68, 70) for adjusting the second feed (44) and the first return (42) are compared in pairs.

## Revendications

1. Dispositif de direction hydraulique (10), qui relie un vérin de direction (12) à un circuit d'alimentation (14) par voie hydraulique, dans lequel le circuit d'alimentation (14) peut être relié hydrauliquement au vérin de direction (12) de manière active par l'intermédiaire d'un groupe de direction (16) pour former un raccordement de flux principal (22) et le circuit d'alimentation (14) peut être relié de surcroît hydrauliquement au vérin de direction (12) de manière active par l'intermédiaire d'un ensemble régulateur de débit (24), de sorte qu'un raccordement de flux secondaire (26) peut être formé, lequel contourne le raccordement de flux principal (22) et via lequel au moins une première chambre de travail (28) et une seconde chambre de travail (30) du vérin de direction (12) peuvent être alimentées en fluide hydraulique indépendamment l'une de l'autre et dans lequel l'ensemble régulateur de débit (24) comprend plusieurs vannes (32, 34, 36, 38, 61, 63, 68, 70) pouvant être commandées indépendamment les unes des autres, lesquelles permettent de régler au moins une première arrivée (40) et un premier retour (42) de la première chambre de travail (28) ainsi qu'une seconde arrivée (44) et un second retour (46) de la seconde chambre de travail (30), et dans lequel le dispositif de direction hydraulique (10) comprend encore au moins une vanne d'arrêt (48, 66) pour bloquer au moins par endroits le raccordement de flux secondaire (26) et encore au moins un appareil de commande électrique (50), qui est conçu de manière à délivrer des courants d'excitation d'une ou de plusieurs vannes (32, 34, 36, 38, 61, 63, 68, 70),
**caractérisé en ce que**
le dispositif de direction hydraulique (10) comprend des moyens (56) pour mesurer et pour comparer au moins deux courants d'excitation et les moyens (56) sont conçus par ailleurs pour mettre au moins la vanne d'arrêt (48, 66) en position de blocage s'il existe un écart entre les courants d'excitation comparés.

2. Dispositif de direction hydraulique selon la revendication 1,
**caractérisé en ce que**
les moyens (56) sont conçus pour mesurer les courants d'excitation de toutes les vannes (32, 34, 36, 38, 61, 63, 68, 70) et pour comparer par paire les courants d'excitation des vannes (32, 36, 61, 63, 68, 70) afin de régler la première arrivée (40) et le second retour (46), ainsi que pour comparer par paire les courants d'excitation des vannes (34, 38, 61, 63, 68, 70) afin de régler la seconde arrivée (44) et le premier retour (42).

3. Dispositif de direction hydraulique selon la revendication 1 ou 2,
**caractérisé en ce que**
les moyens (56) sont conçus pour mettre toutes les vannes (32, 34, 36, 38, 61, 63, 68, 70) et la vanne d'arrêt (48, 66) en position de blocage s'il existe un écart entre les courants d'excitation comparés.

4. Dispositif de direction hydraulique selon l'une des revendications 1 à 3,
**caractérisé en ce que**
les moyens (56) comprennent au moins un certain nombre de capteurs (58) pour mesurer les courants d'excitation et un algorithme de comparaison (60).

5. Dispositif de direction hydraulique selon l'une des revendications 1 à 4,
**caractérisé en ce que**
l'appareil de commande (50) comprend en plus un algorithme de régulation usuel servant à supprimer les écarts de position (54) du vérin de direction (12).

6. Dispositif de direction hydraulique selon l'une des revendications 1 à 5,
**caractérisé en ce que**
les vannes (32, 34, 36, 38, 61, 63, 68, 70) de l'ensemble régulateur de débit (24) sont conçues sous la forme de vannes de régulation de débit proportionnelles ou de vannes proportionnelles.

7. Dispositif de direction hydraulique selon l'une des revendications 1 à 6,
**caractérisé en ce que**
l'ensemble régulateur de débit (24) est aussi exploitable comme un appareil indépendant pour servir de pure direction à commande électrique « Steer-By-Wire ».

8. Procédé de sécurisation d'un dispositif de direction hydraulique (10), qui relie un vérin de direction (12) à un circuit d'alimentation (14) par voie hydraulique, dans lequel le circuit d'alimentation (14) peut être relié hydrauliquement au vérin de direction (12) de manière active par l'intermédiaire d'un groupe de direction (16) pour former un raccordement de flux principal (22) et le circuit d'alimentation (14) peut être relié de surcroît hydrauliquement au vérin de direction (12) de manière active par l'intermédiaire d'un ensemble régulateur de débit (24), de sorte qu'un raccordement de flux secondaire (26) se forme, lequel contourne le raccordement de flux principal (22) et via lequel au moins une première chambre de travail (28) et/ou une seconde chambre de travail (30) du vérin de direction (12) peuvent être alimentées en fluide hydraulique indépendamment l'une de l'autre et dans lequel l'ensemble régulateur de débit (24) comprend plusieurs vannes (32, 34, 36, 38, 61, 63, 68, 70) pouvant être commandées indépendamment les unes des autres, lesquelles permettent de régler au moins une première arrivée (40) et/ou un premier retour (42) de la première chambre de travail (28) ainsi qu'une seconde arrivée (44) et/ou un second retour (46) de la seconde chambre de travail (30), et dans lequel le dispositif de direction hydraulique (10) comprend encore au moins une vanne d'arrêt (48, 66) pour bloquer au moins par endroits le raccordement de flux secondaire (26) et encore au moins un appareil de commande électrique (50), qui délivre des courants d'excitation d'une ou de plusieurs vannes (32, 34, 36, 38, 61, 63, 68, 70),
comprenant au moins les étapes :
- mesure d'au moins deux courants d'excitation ;
- comparaison d'au moins deux courants d'excitation ; et
- déplacement d'au moins la vanne d'arrêt (48, 66) en position de blocage s'il existe un écart entre les courants d'excitation comparés.

9. Procédé de sécurisation d'un dispositif de direction hydraulique selon la revendication 8,
**caractérisé en ce que**
- les courants d'excitation de toutes les vannes (32, 34, 36, 38, 61, 63, 68, 70) sont mesurés ; et que
- les courants d'excitation des vannes (32, 36, 61, 63, 68, 70) sont comparés par paire afin de régler la première arrivée (40) et le second retour (46) ainsi que les courants d'excitation des vannes (34, 38, 61, 63, 68, 70) sont comparés par paire afin de régler la seconde arrivée (44) et le premier retour (42).
